(19) **Europäisches Patentamt**
**European Patent Office**
**Office européen des brevets**

(11) **EP 1 989 978 B1**

(12) **EUROPÄISCHE PATENTSCHRIFT**

(45) Veröffentlichungstag und Bekanntmachung des Hinweises auf die Patenterteilung:
**01.09.2010 Patentblatt 2010/35**

(51) Int Cl.:
*A47J 39/00* (2006.01)          *A47J 27/14* (2006.01)
*F24C 7/08* (2006.01)

(21) Anmeldenummer: **07009155.8**

(22) Anmeldetag: **07.05.2007**

(54) **Verfahren zum Führen zumindest eines Garvorgangs**

Method for cooking

Procédé de cuisson

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(43) Veröffentlichungstag der Anmeldung:
**12.11.2008 Patentblatt 2008/46**

(73) Patentinhaber: **Rational AG**
**86899 Landsberg/Lech (DE)**

(72) Erfinder:
• **Breunig, Manfred Dipl.-Ing.**
**86956 Schongau (DE)**

• **Greiner, Michael Dr.**
**86899 Landsberg (DE)**

(74) Vertreter: **Weber-Bruls, Dorothée et al**
**Jones Day**
**Hochhaus am Park**
**Grüneburgweg 102**
**60323 Frankfurt am Main (DE)**

(56) Entgegenhaltungen:
**WO-A-96/03681          WO-A-98/52418**
**WO-A-2005/016096    DE-A1-102006 008 096**
**DE-C1- 4 324 015      DE-U1- 20 203 117**
**GB-A- 2 380 923**

EP 1 989 978 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die vorliegende Erfindung betrifft ein Verfahren zum Führen zumindest eines Garvorgangs in einem Garraum eines Gargerätes auf der Grundlage einer Mehrzahl von über eine Eingabeeinrichtung des Gargerätes eingebbaren Parameter, bei dem über die Parameter zumindest ein Gargut und/oder Garprogramm und zumindest eine Start- und/ oder Endzeit des Garens zumindest eines Garguts und/oder für zumindest ein Garprogramm und zumindest ein Garparameter ausgewählt werden.

Im Stand der Technik sind zahlreiche Verfahren zum Führen zumindest eines Garvorgangs an sich bekannt.

So ist es beispielsweise aus der DE 199 45 021 A1 bekannt, einen Garvorgang in Abhängigkeit einer bestimmten Gargutgröße als Garparameter zu führen, wobei die Kerntemperatur eines Garguts, der Durchmesser eines Garguts, die Dichte des Garguts, die Gargutart, der Reifegrad des Garguts, der pH-Wert des Garguts, die Konsistenz des Garguts, der Lagerungszustand des Garguts, der Geruch des Garguts, der Geschmack des Garguts, die Qualität des Garguts, die Bräunung des Garguts, die Krustenbildung des Garguts, der Vitaminabbau des Garguts, die Entstehung kanzerogener Substanzen im Gargut, die Hygiene des Garguts und/oder die Wärmeleitfähigkeit des Garguts als Gargutgröße bestimmt werden können.

Aus der EP 1 338 849 A1 ist die Führung eines Garvorgangs in Abhängigkeit von zumindest zwei Parametern bekannt, die über ein wenigstens zweidimensionales Kennfeld von einer Bedienperson auswählbar sind. Bei den Parametern kann es sich beispielsweise um einen Bräunungsgrad, also den externen Gargrad eines Garguts, oder einer Kerntemperatur, also den internen Gargrad des Garguts, handeln.

Die DE 196 09 116 A1 offenbart ein Garverfahren in einem Garraum, das dann beendet wird, wenn eine Ist-Kerntemperatur in einem Gargut eine Soll-Kerntemperatur erreicht. Wenn zudem der Endzeitpunkt des Garverfahrens eingestellt ist, werden die Garraumtemperatur, die umlaufende Strömungsgeschwindigkeit im Garraum und die Feuchte im Garraum derart eingestellt oder verändert, dass zum vorgegebenen Endzeitpunkt die Soll-Kerntemperatur vorliegt.

Des Weiteren sind im Stand der Technik zahlreiche Verfahren bekannt, die das Garen einer Vielzahl von Gargütern in einem Gargerät, insbesondere in unterschiedlichen Beladungsebenen eines Garraums, betreffen.

So ist aus der WO 2005/016096 A1 ein Gargerät mit einer Vielzahl von Beladungsebenen bekannt, wobei jeder Beladungsebene eine manuell initiierbare Uhr zugeordnet ist, über die eine Garzeit in dieser Beladungsebene einstellbar ist, die es ermöglicht, auf einer Anzeigeeinheit eine Restgarzeit für diese Beladungsebene anzuzeigen und nach Ablauf der Garzeit einen Hinweis zum Entladen von Gargut aus dieser Beladungsebene auszugeben.

Ein Großküchengargerät mit einer Vielzahl von Einschüben, die mit zu garenden Speisen beladbar und mit mindestens einem auf ein gewünschtes Garzeitintervall einstellbaren Zeitzähler verbunden sind, ist aus der DE 43 24 015 C1 bekannt. Dabei ist jeder Einschub über einen Schalter mit einem Zeitzähler verbunden, und das Großküchengargerät umfasst eine Beladungsanzeige, die mit den Zeitzählern so verbunden ist, dass sie auf das Beladen der Einschübe hin automatisch anzeigt, wann aus welchem Einschub eine fertig gegarte Speise zu entnehmen ist.

Die DE 101 32 581 A1 betrifft ebenfalls ein Gargerät mit einer Vielzahl von Behandlungsebenen, in denen unterschiedliche Gargüter gegart werden können. Dabei ist es möglich, bei gleichzeitigem Beginn ein gemeinsames Ende des Garens dieser Gargüter zu erhalten, auch wenn die Gargüter unterschiedliche Garzeiten benötigen. Zu diesem Zwecke ist das Garraumklima in den verschiedenen Beladungsebenen separat einstellbar, um energiesparend die unterschiedlichen Garverfahren parallel in einem Garraum ablaufen lassen zu können.

Ferner ist es aus der EP 0 313 768 B2 bekannt, ein parametergesteuertes System in einem Gargerät zu verwenden, das es ermöglicht, über eine Eingabeeinrichtung bei Auswahl eines bestimmten Garguts mindestens einen Wärmeparameter vorzugeben und bei nochmaligem Betätigen der Eingabeeinrichtung eine Stelle im Garraum für das ausgewählte Gargut anzuzeigen.

Eine Backvorrichtung mit einer Steuervorrichtung und damit verbundenen Eingabevorrichtungen für einen Soll-Luftfeuchtigkeitswert und/oder Soll-Temperaturwert, Messwertgebern zum Erfassen eines Ist- Luftfeuchtigkeitswerts und/oder Ist-Temperaturwerts und einem Zeitgeber ist der WO 98/52418 entnehmbar.

Die nicht vorveröffentlichte DE 10 2006 008 096 A1 offenbart ein Verfahren zum Führen von Garprogrammen, bei dem zu einem Startzeitpunkt die zu einem späteren Zeitpunkt mit weiterem Gargut zu beladenden Behandlungsebenen ausgewählt werden. Im Anschluss wird das Garraumklima in Abhängigkeit von der Beladung eingestellt, und danach werden Signale zum Entnehmen des Garguts oder der Gargüter abgegeben.

Die DE 10 2005 020 744 B3 offenbart zudem die Kompensation der Öffnung einer Garraumtür beim Führen eines Garvorgangs.

Aus der WO 96/03681 A2, DE 202 03 117 U1 sowie GB 2 380 923 A ist jeweils der Einsatz einer Vielzahl aufeinander abgestimmter Garräume bekannt.

Trotz der zahlreichen im Stand der Technik bekannten Garverfahren und Gargeräten besteht noch stets das Bedürfnis nach weiterer Flexibilität unter gleichzeitiger Automatisierung eines Garverfahrens.

Aufgabe der Erfindung ist es daher, das gattungsgemäße Verfahren derart weiterzuentwickeln, dass bei erhöhter Flexibilität eine erhöhte Garsicherheit im Vergleich zu den bekannten Verfahren durch weiteres Automatisieren vorliegt, so dass am Ende eines Garvorgangs ein Garwunschergebnis vorliegt.

Diese Aufgabe wird erfindungsgemäß dadurch gelöst, dass in Abhängigkeit von der Start- und/oder Endzeitauswahl bei Auswahl einer Vielzahl von Gargütern eine Ausgabeeinrichtung angibt, wann welches Gargut in den Garraum zu laden und aus dem Garraum zu entfernen ist, wobei über zumindest einen zumindest einen Garparameter bestimmenden Parameter die Reihenfolge des Garens der Gargüter und/oder der Garprogramme optimiert wird, so dass jeder Garvorgang bezüglich der vom Gargerät verbrauchten Energie, der benötigten Zeit und/oder des Gewichtsverlustes jedes Garguts optimiert ist.

Dabei kann vorgesehen sein, dass bei einer Vielzahl von Gargütern und/oder Garprogrammen die Reihenfolge des Garens der Gargüter und der Garprogramme optimiert wird. Somit wird ein hohes Maß an Flexibilität geliefert, unter gleichzeitiger Beibehaltung einer exakten Führung eines Garprozesses zum Erfüllen eines Garwunsches. Bei einer ersten Alternative gemäß der Erfindung wird nämlich die Möglichkeit bereitgestellt, mehrere Garprogramme automatisch hintereinander ablaufen zu lassen, selbst ineinander verschachtelt ohne Vorgabe einer Reihenfolge und auch mehrfach. Beispielsweise kann mit einer Startzeitvorwahl das gesamt Morgenprogramm in einer Bäckerei einmalig vorgegeben werden, so dass das Personal der Bäckerei jeden Morgen genau angezeigt bekommt, wann welches Gargut zu laden und dann auch zu entladen ist. Auch können Mischbeschickungen von Finishingabläufen bspw. zur Vorbereitung eines Banketts vorprogrammiert werden, wobei automatisch für Speisen mit längeren Gardauern zuerst eine Beladungsaufforderung erfolgt. Bei einer zweiten Alternative wird die Flexibilität beim Garen dadurch erhöht, dass eine Bedienperson eingeben kann, dass ein Garvorgang auf die verbrauchte Energie, die benötigte Zeit und/oder den Gewichtsverlust des Garguts optimiert wird. Eine Kombination dieser beiden Alternativen führt somit insbesondere dazu, dass eine Bedienperson eine Vielzahl von Garprogrammen unter gleichzeitiger Angabe, dass ein Garen energiesparend durchzuführen ist, auswählen kann. Das erfindungsgemäße Verfahren verwertet diese Informationen dann derart, dass eine energieoptimierte Programmverkettung vorgeschlagen wird, durch Anzeige, wann welches Gargut zu laden und zu entladen ist.

Bevorzugt ist erfindungsgemäß dabei, dass die Ausgabeeinrichtung eine Beladungsaufforderung, vorzugsweise unter Angabe eines Garguts und/oder einer Garraumzone, wie einer Beladungsebene, eine Fehlermeldung und/oder eine Garinformation in Abhängigkeit von den eingegebenen Parametern, einer Vielzahl von gespeicherten Daten, insbesondere umfassend Garverläufe, zumindest einem ersten im Garraum erfaßten Meßwert, zumindest einem zweiten in zumindest einem Gargut erfaßten Meßwert, zumindest einem dritten Meßwert eines Garmediums und/oder zumindest einem vierten Meßwert zur Öffnung einer Tür zum Verschließen des Garraums anzeigt. Es kann also auch vom Gargerät vorgeschlagen werden, ob und ggf. welches Gargut zusätzlich zu einem bereits laufenden Garvorgang gegart werden kann, was zu einer weiteren Energieeinsparung sowie Zeiteinsparung führt. Aber auch eine Plausibilitätsprüfung der Eingaben der Bedienperson kann automatisch stattfinden.

Ferner kann erfindungsgemäß vorgesehen sein, dass zumindest eine für den internen Gargrad und/oder externen Gargrad jedes Gargutes, der am Ende eines Garprogramms erwünscht ist, und/oder den C-Wert jedes Garguts charakteristische Größe als Parameter eingebbar ist. Dies kann zu einer Steigerung der Garqualität führen.

Mit der Erfindung wird auch vorgeschlagen, dass während eines Garvorgangs eine Vielzahl von Garprogrammen, die zumindest zum Teil auch unterschiedlich sein können, ablaufen, und/oder zumindest zwei Garprogramme zumindest zeitweise überlappend ablaufen, wobei der Garvorgang vorzugsweise speicherbar ist und/oder während des Gangvorgangs vorzugsweise eine Kompensation der Auswirkungen einer Öffnung einer Garraumtür durchführbar ist.

Dadurch kommt es nicht nur zur Vermeidung von Totzeiten sowie Einsparung von Ressourcen, sondern können auch langwierige mehrfach Eingaben vieler Garprogramme vermieden werden, nämlich durch Speicherung aller Eingaben, während Wunschgarergebnisse durch Kompensation jeder Öffnung einer Garraumtür sichergestellt sind.

Erfindungsgemäß kann des Weiteren vorgesehen sein, dass der zumindest eine zumindest einen Garparameter bestimmende Parameter über ein mehrdimensionales Feld, das vorzugsweise auf der Anzeigeeinrichtung anzeigbar ist, ausgewählt wird. Somit liegt eine vereinfachte Bedienung vor.

Ein Gargerät mit einer Steuer- oder Regeleinrichtung in Wirkverbindung mit der Eingabeeinrichtung und der Ausgabeeinrichtung kann zu Durchführung eines erfindungsgemäßen Verfahrens durch Ansteuerung einer Heizeinrichtung, umfassend zumindest eine elektrische Heizung, einen Gasbrenner, einen Wärmetauscher und/oder eine Einrichtung zum Abstrahlen elektromagnetischer Strahlung in den Garraum, insbesondere in Form einer Mikrowellenquelle, einer Einrichtung zum Einführen von Feuchtigkeit in den Garraum, umfassend zumindest einen Dampfgenerator, einen Wasserzerstäuber und/oder eine Beschwadungseinrichtung, einer Einrichtung zum Abführen von Feuchtigkeit aus dem Garraum, umfassend zumindest eine Frischluftzufuhr und/oder einen Kondensator, und einer Einrichtung zum Zirkulieren von Garraumatmosphäre, umfassend zumindest ein Gebläse und/oder eine Pumpe, ausgelegt sein.

Dabei kann eine Speichereinrichtung, in der eine Vielzahl von Garverläufen abgelegt sind, wobei vorzugsweise nach Beendigung eines jeden Garvorgangs jeder dabei durchlaufenen Garverläufe in der Speichereinrichtung ablegbar ist, vorgesehen sein.

Ferner kann zumindest eine Sensiereinheit, über die der erste, zweite, dritte und/oder vierte Meßwert erfaßbar ist, vorgesehen sein.

Auch kann vorgesehen sein, dass die Eingabeeinrichtung die Auswahl zumindest zweier Parameter über ein zweidimensionales Feld, beispielsweise über einen Touch-Screen oder einen Joystick, ermöglicht.

Weitere Merkmale und Vorteile der Erfindung ergeben sich aus der nachfolgenden Beschreibung konkreter Ausführungsbeispiele.

Ein erfindungsgemäßes Verfahren ermöglicht es beispielsweise, eine morgendliche Thekenbeschickung für eine Bäckereifiliale zeit- und energieoptimiert zu gewährleisten. So können täglich verwendete Garprogramme, die jeden Tag aus tiefgefrorenen Rohlingen oder vorgebackenen Produkten frisch zu backende Teigwaren fertigen sollen, einmalig über eine Eingabeeinrichtung in ein nicht gezeigtes Gargerät eingegeben und gespeichert werden, so dass dann nach jedem morgendlichen Start des Gargeräts dieses zuerst seinen Garraum aufheizt und dann die vorgegebenen Programme sozusagen in einem Stapel abarbeitet, und zwar unter besonderer Berücksichtigung einer Zeit- und Energieoptimierung. Ist es z. B. jeden Tag erforderlich, Baguettes, Brötchen, Brezeln und Croissants zu backen, so können auf einer Anzeigeeinrichtung des Gargeräts nach Starten desselben und einer Aufheizzeit folgende Aufforderungen aufscheinen:

1. Beladen Baguette,

2. Entladen Baguette,

3. Beladen Brötchen,

4. Entladen Brötchen,

5. Beladen Brezeln,

6. Entladen Brezeln,

7. Beladen Croissant, und

8. Entladen Croissant;

wobei zwischen den verschiedenen Aufforderungen zum Beladen jeweils ein Vorheizen stattfinden kann. Nach Durchlaufen dieses Programmstapels sind die Theken der Bäckereifiliale gefüllt.

Eine weitere Abarbeitung eines Programmstapels kann beispielsweise bei der Zubereitung eines Mittagmenüs für die Schulverpflegung von Nutzung sein. Dabei sollen Speisen, beispielsweise jeweils in Form einer Fleischscheibe, einer Kartoffelbeilage und einer Gemüsebeilage für viele Schüler in Gastronomiebehältern derart regeneriert bzw. fertig gegart werden, dass eine Essensausgabe zu einem bestimmten Zeitpunkt stattfinden kann. Nach Einschalten des Gargeräts und Eingabe der Speisen wird bei einem erfindungsgemäßen Verfahren dann eine optimale Verkettung der abzulaufenden Garverfahren ausgerechnet und sodann auf der Anzeigeeinrichtung nach einem Vorheizen des Garraums die Aufforderung gegeben, zuerst das Fleisch zu laden. Nach einer ersten Zeitspanne erfolgt dann die Aufforderung des Beladens der Kartoffelbeilage. Nach einer zweiten Zeitspanne kommt dann die Beladungsaufforderung für die Gemüsebeilage. Nach Ablauf einer dritten Zeitspanne kommt schließlich die Aufforderung, sowohl das Fleisch als auch die Kartoffelbeilage und die Gemüsebeilage zu entladen.

Beispielsweise kann auch parallel zu einem Dämpfen von Gemüse in einem Garraum ein Eierkochen in demselben stattfinden, da beide ein ähnliches Garraumklima benötigen. Genauer gesagt kann bei Eingabe der Zubereitung von Kartoffel in einem Dämpfverfahren und dem Kochen von Eiern bei einem erfindungsgemäßen Verfahren auf einer Anzeigeeinrichtung nach einem Vorheizschritt erscheinen, dass die Kartoffeln und die Eier gleichzeitig beladen werden sollen, während dann eine Entladungsanzeige für die Eier vor einer Entladungsanzeige für das Gemüse erfolgt. Türöffnungszeiten werden dabei automatisch berücksichtigt, wie beispielsweise in der DE 10 2005 020 744 B3 der Anmelderin beschrieben.

Durch die erfindungsgemäße Programmverschachtelung und/oder -stapelung ist es also möglich, ein Garraumklima zur Energie- und Zeiteinsparung zwecks Zubereitung unterschiedlicher Speisen zu nutzen.

Es ist also festzuhalten, dass ein erfindungsgemäßes Verfahren eine optimale Zeitfolge von hintereinander und/oder zumindest teilweise parallel ablaufenden Verfahren berechnet und einer Bedienperson das entsprechende Ergebnis durch Beladungs- und Entladungsaufforderungen anzeigt. Um hier eine weitere Variabilität einzubringen, ist erfindungsgemäß auch vorgesehen, ein Garen mit unterschiedlichen Prioritäten durchzuführen. Mit anderen Worten soll nicht nur eine Optimierung der Garqualität, also hinsichtlich des internen und externen Gargrads, stattfinden, sondern auch die Möglichkeit bestehen, dass ein Kunde eine energieoptimierte, zeitoptimierte oder gewichtsoptimierte Variante wählt. Allerdings beeinflussen sich all diese Parameter gegenseitig, so dass das erfindungsgemäße Verfahren einen Kompromiss auswählt, so dass mit anderen Worten die Auswahl einer Bedienperson einen Schwerpunkt bei der Optimierung eines Garverfahrens festlegt. So kann beispielsweise eine Anzeigeeinrichtung eines nicht gezeigten Gargeräts ein zweidimensionales Feld zur Auswahl von Garparametern anzeigen, bspw. in Form einer Zeit auf der x-Achse und einer Energie auf der y-Achse, und eine Bedienperson kann in diesem Feld einen Punkt auswählen. Ist die Anzeigeeinrichtung in Form eines Touchscreens gegeben, kann einfach ein Punkt durch einen Fingerdruck aktiviert werden, wobei eine Auswahl auch über einen Joystick denkbar ist.

Eine Zeit- und Energieoptimierung erhält man bei Gargeräten, die zusätzlich zu einer konventionellen Heizeinrichtung, sei es in Form einer elektrischen Heizeinrichtung oder umfassend einen Gasbrenner, zumindest eine Mikrowellenquelle aufweist, da Mikrowellen eine höhere Flexibilität ermöglichen, indem sie zu einer schnellen Erhöhung der Kerntemperatur im Inneren eines Garguts führen, ohne dass dadurch ein bestimmter Endgarzustand zu einem frühen Zeitpunkt erreicht wird. Daher ist es bei Ansteuerung einer Mikrowellenquelle empfehlenswert, zur Führung des Garprozesses den sogenannten Kochwert (C-Wert) heranzuziehen, der sich wie folgt berechnen läßt:

$$C \, {}^{UF}_{BT} \; = \; \int\limits_{St}^{t'} U F^{\frac{[T(t)-BT]}{10}} dt \, ,$$

wobei

UF = Umrechnungsfaktor,
BT = Bezugstemperatur = 100°C,
T(t) = Kerntemperaturverlauf,
St = Zeitpunkt, bei dem eine Starttemperatur überschritten wurde, abhängig vom Lebensmittel und
t' = Ist-Zeit.

Beispielsweise möchte eine Bedienperson eines Gargeräts für eine Feier ein Essen zu einer bestimmten Zeit servieren und die Zubereitung soll energiesparend ablaufen. So könnte die Bedienperson zur Vorbereitung der Feier eingeben, dass am Tag der Feier zu einer bestimmten Uhrzeit ein Braten fertig gegart sein sollen, und zwar mit möglichst geringem Energieverbrauch. So würde das erfindungsgemäße Verfahren berechnen, zu welchem Zeitpunkt eine Beladungsanzeige zu erfolgen hat, um die Bedienperson zu erinnern, das Gargerät zu beladen.

Sollte die von der Bedienperson erwünschte Zeit der Fertigstellung des Bratens kürzer als die tatsächlich benötigte Garzeit sein, so wird auf der Anzeigeeinrichtung des Gargeräts ein entsprechender Hinweise ausgegeben, nämlich in Form einer Fehlermeldung. Es findet also eine Plausibilitätsprüfung erfindungsgemäß automatisch statt.

Auf der Anzeigeeinrichtung kann während eines Garprozesses angezeigt werden, welche Gargeräteeinstellungen vorliegen, beispielsweise betreffend die Mikrowellenleistung, die Feuchte und dergleichen. Auch ist es erfindungsgemäß möglich, dass eine Bedienperson über die Anzeigeeinrichtung die Information erhält, welches Gargut parallel zu einem bereits ablaufenden Garprozess optimal mitgegart werden könnte. So könnte beispielsweise beim Garen eines Bratens, was eine längere Zeitdauer in Anspruch nimmt, angezeigt werden, dass Gemüsebeilagen ab einem bestimmten Zeitpunkt hinzugegeben werden können. Es wird also eine optimale Programmverschachtelung und Parallelverarbeitung von Gargütern vorgeschlagen.

Ferner ist darauf hinzuweisen, dass die Berechnungen bei dem erfindungsgemäßen Verfahren auf der Grundlage zuvor aufgenommener Meßkurven unter Annahme einer Vollbeschickung eines Gargeräts durchgeführt werden können, so dass bei einer Teilbeschickung eine Anpassung des Verfahrens automatisch stattfinden muß, nämlich in Abhängigkeit von über zumindest eine Meßeinrichtung aufgenommene Meßwerte. Solche Anpassungen sind im Stand der Technik gut bekannt, siehe beispielsweise die DE 196 09 116 A1.

Der Vorteil einer Programmverkettung oder -stapelung ist insbesondere auch darin zu sehen, dass eine Bedienperson eine Abfolge von Garprogrammen nur einmal eingeben muß und in dem Gargerät hinterlegen kann.

Die in der voranstehenden Beschreibung und in den Ansprüchen offenbarten Merkmale können sowohl einzeln als auch in jeder beliebigen Kombination für die Verwirklichung der Erfindung in ihren verschiedenen Ausführungsformen wesentlich sein.

**Patentansprüche**

1. Verfahren zum Führen zumindest eines Garvorgangs in einem Garraum eines Gargerätes auf der Grundlage einer Mehrzahl von über eine Eingabeeinrichtung des Gargerätes eingebbaren Parameter, bei dem über die Parameter zumindest ein Gargut und/oder Garprogramm und zumindest eine Start- und/oder Endzeit des Garens zumindest eines Garguts und/oder für zumindest ein Garprogramm und zumindest ein Garparameter ausgewählt werden,
**dadurch gekennzeichnet, dass**
in Abhängigkeit von der Start- und/oder Endzeitauswahl bei Auswahl einer Vielzahl von Gargütern eine Ausgabeeinrichtung angibt, wann welches Gargut in den Garraum zu laden und aus dem Garraum zu entfernen ist, wobei über zumindest einen zumindest einen Garparameter bestimmenden Parameter die Reihenfolge des Garens der Gargüter optimiert wird, so dass jeder Garvorgang bezüglich der vom Gargerät verbrauchten Energie, der benötigten Zeit und/oder des Gewichtsverlustes jedes Garguts optimiert ist.

**2.** Verfahren nach Anspruch 1, **dadurch gekennzeichnet, dass**
bei einer Vielzahl von Gargütern und/oder Garprogrammen die Reihenfolge des Garens der Gargüter und der Garprogramme optimiert wird.

**3.** Verfahren nach Anspruch 1 oder 2, **dadurch gekennzeichnet, dass**
die Ausgabeeinrichtung eine Beladungsaufforderung, vorzugsweise unter Angabe eines Garguts und/oder einer Garraumzone, wie einer Beladungsebene, eine Fehlermeldung und/oder eine Garinformation in Abhängigkeit von den eingegebenen Parametern, einer Vielzahl von gespeicherten Daten, insbesondere umfassend Garverläufe, zumindest einem ersten im Garraum erfassten Messwert, zumindest einem zweiten in zumindest einem Gargut erfassten Messwert, zumindest einem dritten Messwert eines Garmediums, und/oder zumindest einem vierten Messwert zur Öffnung einer Tür zum Verschließen des Garraums anzeigt.

**4.** Verfahren nach einem, der vorangehenden Ansprüche, **dadurch gekennzeichnet, dass** zumindest eine für den internen Gargrad und/oder externen Gargrad jedes Garguts, der am Ende eines Garprogramms erwünscht ist, und/oder den C-Wert jedes Garguts charakteristische Größe als Parameter eingebbar ist.

**5.** Verfahren nach einem der vorangehenden Ansprüche, **dadurch gekennzeichnet, dass** während eines Garprozesses eine Vielzahl von Garprogrammen, die zumindest zum Teil auch unterschiedlich sein können, ablaufen, und/oder zumindest zwei Garprogramme zumindest zeitweise überlappend ablaufen, wobei der Garvorgang vorzugsweise speicherbar ist und/oder während des Garvorgangs vorzugsweise eine Kompensation der Auswirkungen einer Öffnung der Garraumtür durchführbar ist.

**6.** Verfahren nach einem der vorangehenden Ansprüche, **dadurch gekennzeichnet, dass** der zumindest eine zumindest einen Garparameter bestimmende Parameter über ein mehrdimensionales Feld, das vorzugsweise auf der Anzeigeeinrichtung anzeigbar ist, ausgewählt wird.

**Claims**

**1.** A method for conducting at least one cooking process in a cooking chamber of a cooking appliance based on multiple parameters that can be entered via an input device of the cooking appliance,
wherein at least one cooking product and/or cooking program and at least one starting and/or ending time for cooking at least one cooking product and/or for at least one cooking program and at least one cooking parameter are selected using the parameters,
**characterized in that**
depending on the selection of the starting and/or ending time when selecting a number of cooking products, an output device indicates when which cooking product is to be loaded into and removed from the cooking chamber, wherein the sequence for cooking the cooking products is optimized using at least one parameter that determines at least one cooking parameter, so that each cooking process is optimized with respect to the energy consumed by the cooking appliance, the required time and/or the weight loss of each cooking product.

**2.** A method according to claim 1, **characterized in that** in case of multiple cooking products and/or cooking programs, the sequence for cooking the cooking products and of the cooking programs is optimised.

**3.** A method according to claim 1 or 2, **characterized in that** the output device displays a loading request preferably while specifying a cooking product and/or a cooking chamber zone, such as a loading level, an error message and/or some cooking information depending on the entered parameters, multiple stored data, particularly comprising cooking procedures, at least a first measured value recorded in the cooking chamber, at least a second measured value recorded in at least one cooking product, at least a third measured value of a cooking medium and/or at least a fourth measured value for opening a door used for closing the cooking chamber.

EP 1 989 978 B1

4. A method according to any one of the preceding claims, **characterized in that** at least one value, which is characteristic for the internal degree of cooking and/or external degree of cooking of each cooking product that is desired at the end of a cooking program, and/or the C value of each cooking product, can be entered as a parameter.

5. A method according to any one of the preceding claims, **characterized in that** during a cooking process, a number of cooking programs that can be partly different from each other and/or at least two cooking programs that overlap at least occasionally run, wherein the cooking process can preferably be stored and/or the effects of opening the cooking chamber door during the cooking process can preferably be compensated for.

6. A method according to any one of the preceding claims, **characterized in that** the at least one parameter that determines at least one cooking parameter is selected using a multidimensional panel that can preferably be displayed on the display device.


**Revendications**

1. Procédé de menage d'au moins un processus de cuisson dans un espace de cuisson d'un appareil de cuisson sur la base d'une pluralité de paramètres qui peuvent être entrés par l'intermédiaire d'un dispositif d'entrée de l'appareil de cuisson, dans lequel au moins un produit à cuire et/ou un programme de cuisson et au moins une heure de départ et/ou une heure de fin de la cuisson d'au moins un produit de cuisson et/ou pour au moins un programme de cuisson et au moins un paramètre de cuisson sont sélectionnés par l'intermédiaire des paramètres, **caractérisé en ce que**
un dispositif de sortie indique à quel moment quel produit à cuire doit être chargé dans l'espace de cuisson et doit être sorti de l'espace de cuisson, en fonction du choix de l'heure de départ et/ou de l'heure de fin, dans le cas d'une sélection d'une pluralité de produits à cuire,
la séquence de cuisson des produits à cuire étant optimisée par l'intermédiaire d'au moins un paramètre déterminant au moins un paramètre de cuisson, de sorte que chaque processus de cuisson est optimisé par rapport à l'énergie consommée par l'appareil de cuisson, au temps nécessaire et/ou à la perte de poids de chaque produit à cuire.

2. Procédé selon la revendication 1, **caractérisé en ce que**
la séquence de cuisson des produits à cuire et des programmes de cuisson est optimisée pour une pluralité de produits à cuire et/ou de programmes de cuisson.

3. Procédé selon la revendication 1 ou 2, **caractérisé en ce que**
le dispositif de sortie affiche une invitation de chargement, de préférence avec indication d'un produit à cuire et/ou d'une zone d'espace de cuisson, comme un plan de chargement, un message d'erreur et/ou une information de cuisson en fonction des paramètres entrés, d'une pluralité de données mémorisées, comprenant en particulier des déroulements des cuissons, au moins une première valeur de mesure enregistrée dans l'espace de cuisson, au moins une deuxième valeur de mesure enregistrée dans au moins un produit à cuire, au moins une troisième valeur de mesure d'un milieu de cuisson, et/ou au moins une quatrième valeur de mesure pour l'ouverture d'une porte destinée à la fermeture de l'espace de cuisson.

4. Procédé selon l'une quelconque des revendications précédentes, **caractérisé en ce que**
au moins une grandeur caractéristique du degré de cuisson interne et/ou du degré de cuisson externe de chaque produit à cuire, qui est souhaité à la fin d'un programme de cuisson, et/ou de la valeur C de chaque produit à cuire peut être entrée en tant que paramètre.

5. Procédé selon l'une quelconque des revendications précédentes, **caractérisé en ce que**
pendant un procédé de cuisson, une pluralité de programmes de cuisson, qui peuvent également être différents au moins pour partie, se déroulent, et/ou au moins deux programmes de cuisson se déroulent en se chevauchant au moins temporairement, le processus de cuisson pouvant être de préférence mémorisé et/ou une compensation des effets d'une ouverture de la porte d'espace de cuisson pouvant de préférence être mise en oeuvre pendant le processus de cuisson.

6. Procédé selon l'une quelconque des revendications précédentes, **caractérisé en ce que**
le au moins un paramètre déterminant au moins un paramètre de cuisson est sélectionné par l'intermédiaire d'une zone multidimensionnelle qui peut être indiquée de préférence sur le dispositif d'affichage.

7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19945021 A1
- EP 1338849 A1
- DE 19609116 A1
- WO 2005016096 A1
- DE 4324015 C1
- DE 10132581 A1
- EP 0313768 B2
- WO 9852418 A
- DE 102006008096 A1
- DE 102005020744 B3
- WO 9603681 A2
- DE 20203117 U1
- GB 2380923 A